# EUROPEAN PATENT SPECIFICATION

(11) **EP 2 835 255 B1**
(45) Date of publication and mention of the grant of the patent: **16.09.2020**
(21) Application number: 14179656.5
(22) Date of filing: 04.08.2014
(51) Int. Cl.: B32B 7/00, B32B 7/14, B32B 15/00, B32B 15/01, B32B 15/04, B32B 15/098, B32B 15/18, B32B 15/20, B32B 3/28, B32B 3/30, E04C 2/34, B32B 7/12

(54) **STRUCTURAL SANDWICH PANEL FOR HIGH STRENGTH WALLS AND COVERINGS, FURNITURE, TRAIN AND SHIP FURNITURE, AND METHOD FOR PRODUCING IT**
STRUKTURSANDWICHPLATTE MIT HOHER FESTIGKEIT FÜR WÄNDE UND BODENBELÄGE, MÖBEL, BAHN- UND SCHIFFSMÖBEL, UND VERFAHREN ZU DEREN HERSTELLUNG
PANNEAU SANDWICH STRUCTUREL À HAUTE RÉSISTANCE POUR LES MURS ET DES REVÊTEMENTS, DES MEUBLES, MOBILIER DE TRAIN ET DE NAVIRE, ET MÉTHODE POUR SA FABRICATION

(30) Priority: 05.08.2013 IT MI20131338
(43) Date of publication of application: 11.02.2015
(73) Proprietor: 5 W S.r.l., 24060 San Paolo d'Argon (BG) (IT)
(72) Inventor: Donati, Giulia, I-24060 San Paolo d'Argon (BG) (IT)
(74) Representative: Rastelli, Franco

(56) References cited:
- WO-A1-01/09455
- GB-A- 839 250
- GB-A- 1 008 518
- NL-A- 6 502 255
- US-A- 2 190 490
- US-A- 2 783 507
- US-H- H1 621

## Description

### BACKGROUND OF THE INVENTION

The present invention relates to a structural sandwich panel for high strength walls and coverings, furniture, train and ship furniture, and a method for making it.

The invention further relates to a method for making the above structural sandwich panels.

Panels for forming vertical partition walls and horizontal coverings, to be used in civil, industrial, naval, railroad and so on environments, and consisting of a pair of plate elements coupled to one another in a substantially parallel relationship, are already known.

The connection between the plate elements is usually performed by arranging between said two plate elements a further sheet metal element, generally having an undulated or simple fret pattern.

The above sheet metal element comprises, in particular, a surface extending through the overall surface area of the plate elements and having a substantially sinusoidal or simple fret configuration, that is including successively arranged crest or ridge and valley portions.

Said sinusoidal or fretted surface element is so arranged as to contact the surfaces of said plate elements and is caused to adhere to the latter, for example by glue or adhesive materials.

While the above constructional approaches are very simple and inexpensive, they have the drawback that the sinusoidal surface element provides a small contact area with the plate elements at each said ridge and valley of the undulated contour.

The above limited contact area prevents the panel thus assembled from achieving desired duration and strength characteristics.

Moreover, a use of curved surfaces in contact with the panel plate elements does not provide the panel with optimum strength properties, even if, in a fretted panel, the extended contact surface improves the binding.

### SUMMARY OF THE INVENTION

Thus, the aim of the present invention is to provide a structural sandwich panel to be used in civil, industrial, naval, railroad and so on applications, having enhanced strength and structural properties and which, the constituting material weight and thickness being the same, has improved compression, bending and flexure resistances much greater than those of like application existing panels.

The above aim is achieved by the present invention as defined in claims 1, 9 and 15. Further embodiments are defined in the dependent claims 2-8 and 10-14. The invention relates to high strength panels for vertical partitioning walls and horizontal coverings, supporting walls and finishing coverings made, for example, of marbles, laminated materials, tiles, tapestries, fabrics, linoleum, glass, mirrors, of a type comprising at least a plate element, characterized in that said panel further comprises at least a fretted element including a plurality of drawn deformations on a slanted portion of the fretted element, said fretted element being coupled by gluing to said plate element.

According to a preferred embodiment of the present invention, the panel comprises a pair of plate elements so coupled to one another as to extend in a substantially parallel relation, and a fretted element arranged between said plate elements to connect said plate elements by gluing the parallel surfaces of said plate elements.

The inventive structural sandwich panels have different thicknesses depending on a punch to be used for forming the fretted element, and being made of different materials to be used both for the plate and fretted elements, as well as outer coatings.

The present invention relates moreover to either a continuous or a batch or discontinuous method for making structural sandwich panels characterized in that said method comprises a first operating step of making said fretted element by shaping a metal sheet foil by a correspondingly shaped tool, and a second operating step of gluing said plate elements on said fretted element.

Said gluing step is made by using hot pressing assemblies with large mass pressing flat portions or hot gluing in a press oven having two sliding metal belts which are entrained by motor driven rollers.

The adhesive materials used may comprise any desired types of adhesive materials, such as polyurethane, epoxidic, thermosetting and the like adhesive materials.

The surface portions of the fretted sheet metal to be contacted with the plate elements comprise one or more longitudinal cavities parallel to the bending lines of the intermediate fretted element.

Said cavities also operate as stiffening and reinforcement elements for said intermediate or middle fretted element thereby providing an improved adhesion of said middle fretted element to the flat and parallel surfaces forming an integrating part of the inventive panel.

Said adhesion is further improved since it is possible to press in said cavities of said fretted element a great amount of adhesive materials, thereby providing a perfect and strong coupling between the middle fretted coupling element contact surfaces and the flat surfaces of the panel.

### BRIEF DESCRIPTION OF THE DRAWINGS

Further characteristics and advantages of the present invention will become more apparent from the following disclosure, given only by way of an illustrative and non limitative example, with reference to the accompanying drawings, where:
Figure 1 is an exploded perspective view of a structural sandwich panel according to the present invention;
Figure 2 is a further exploded perspective view of the structural sandwich panel shown in Figure 1, including a finishing arrangement, that is a finishing coating made of a melamine laminate materials, glass, mirror, marble, tiles, tapestry, fabric, linoleum, and so on;

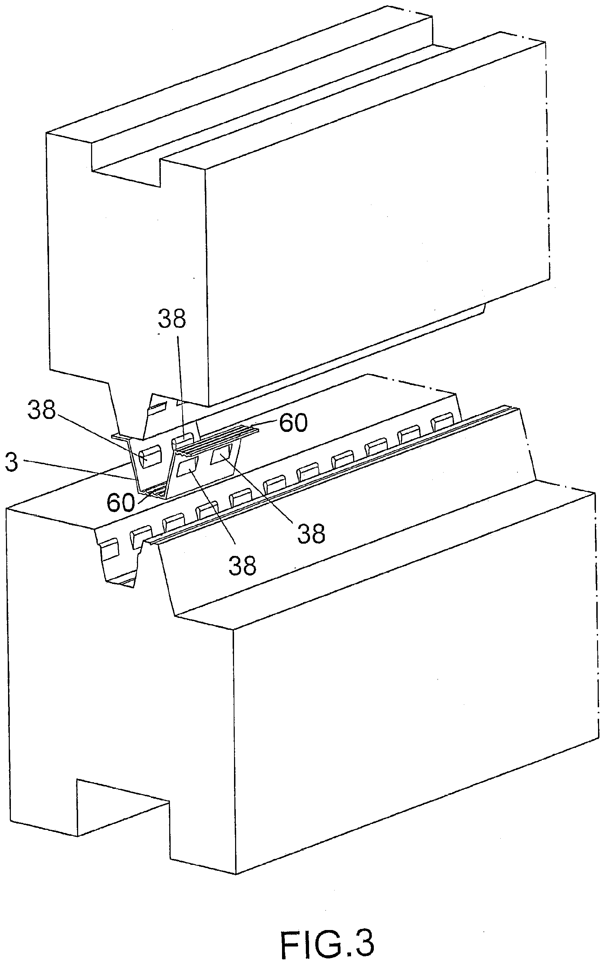

Figure 3 is a perspective view schematically showing an apparatus for providing the drawn deformations on the slanted portion of the fretted element;
Figure 4 is a perspective view of a structural panel including a further fretted element perpendicular to the first fretted element and a further plate element;
Figures 5 and 6 are schematic views of the apparatus for carrying out a method for making the subject panel and a second embodiment of a tool being used in the making method according to the present invention, respectively;
Figure 7 is a perspective view of a constructional panel with its structural covering or skin on a single side thereby allowing a bending of said panel;
Figure 8 is a perspective view of a structural panel therewith an outer bent profile is associated;
Figure 9 is a cross-sectioned perspective view of a curved structural panel;
Figure 10 is a partial cross-sectional view of a curved or bent structural panel of Figure 9;
Figure 11 is an enlarged-scale perspective view showing further details of the drawn deformations formed on slanted portion of the fretted arrangement, said drawn deformations being made in variable configuration, number and size;

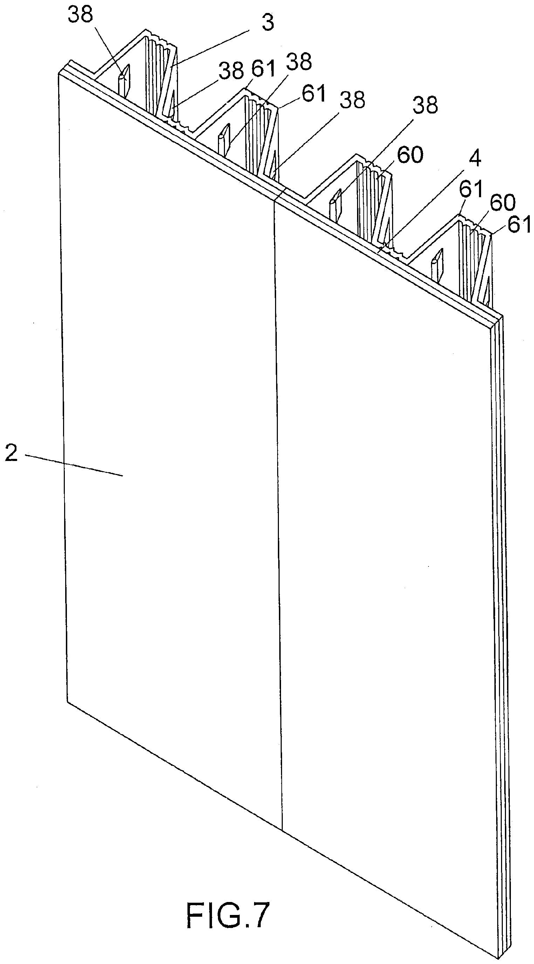

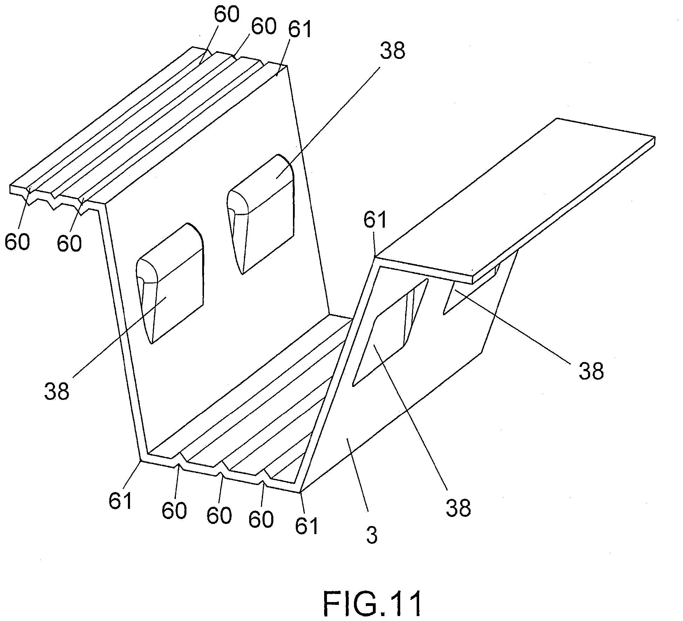

Figures 7, 8 and 11 show a plurality of fretted element V-shaped cavities parallel to the bending lines of said fretted element, which are part of the invention.

In said cavities a large amount of adhesive materials can be pressed, thereby improving the structural strength of the inventive panel.

### DESCRIPTION OF THE PREFERRED EMBODIMENTS

In the following description some preferred embodiments of the present invention will be shown.

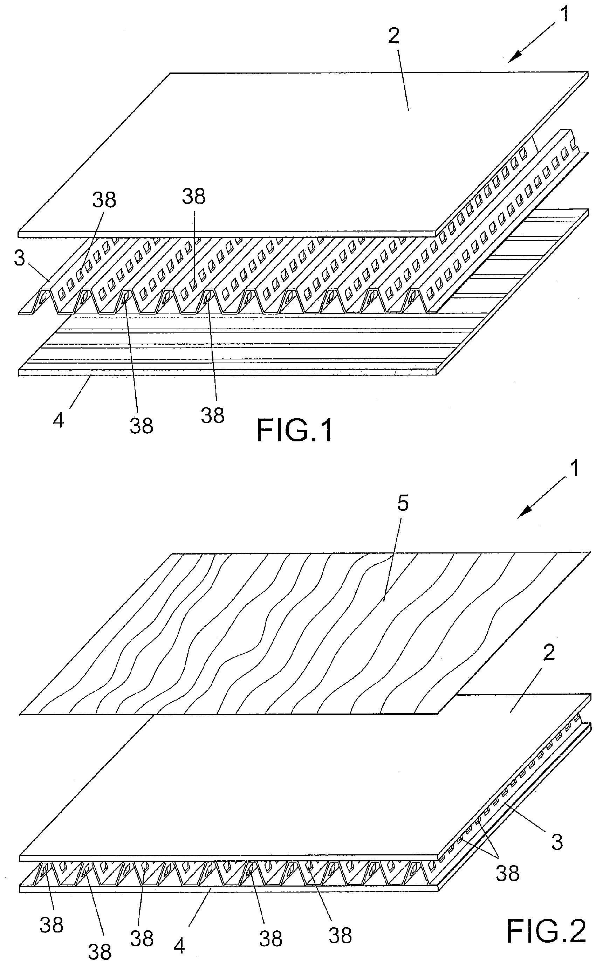

Figure 1 shows a structural panel, generally indicated by the reference number 1, comprising a first plate element 2 and a second plate element 4.

Said plate elements may be made of aluminium, a black or galvanized sheet metal foil, stainless steel or laminated materials.

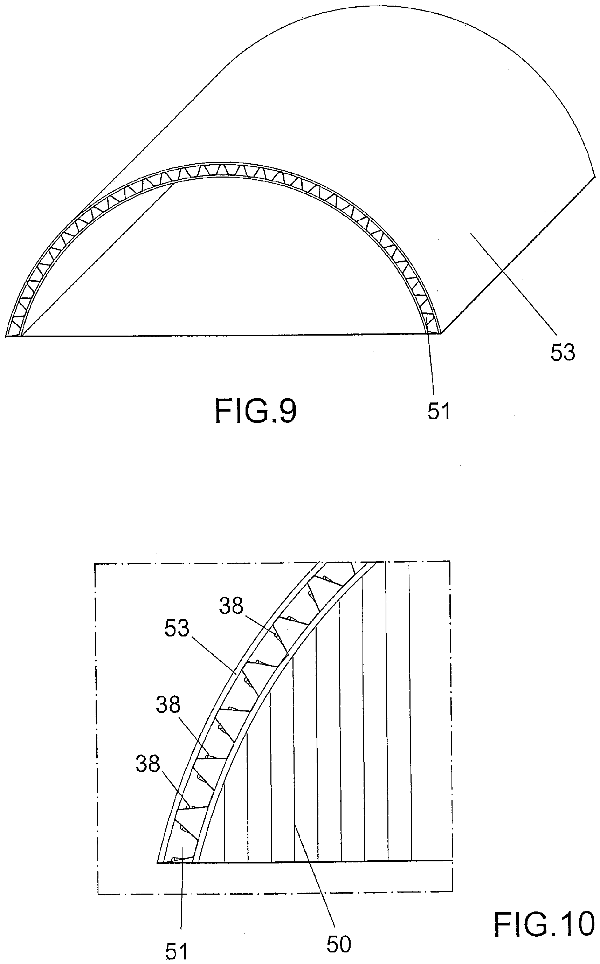

Said plate elements are coupled to one another to be substantially parallel and therebetween is arranged and glued a fretted element 3, including a plurality of drawings 38, clearly shown in Figure 10, and being made of aluminium, a black sheet metal element or a galvanized sheet metal, stainless steel or laminated materials.

As used in the present disclosure, the words "fretted element" are referred to an element, for example made of a sheet metal, which, in cross-section, has a profile including a plurality of horizontal portions, corresponding to ridges and valleys of the profile, and being joined by a plurality of slanted portions, inclined with respect to said horizontal portions, so as to form a succession of trapezium configurations.

Said fretted element 3 has its horizontal surfaces arranged to contact the plate elements 2 and 4 so as to connect said plate elements by gluing.

More specifically, said plate elements 2 and 4 are glued to said fretted element 3 by a glue material selected depending on the elements to be adhesively coupled.

Figure 2 shows a modified embodiment of the present invention, in which the structural panel 1 comprises moreover a melamine laminate plate element 5.

In this embodiment, said laminate element may be directly glued to the fretted element or it may be glued to one of the plate elements, depending on the mechanical strength characteristics to be achieved in the finished panel.

The structural sandwich panel according to the present invention may also be connected to one another by any desired connecting angle, depending on the constructional and furnishing requirements to be achieved.

Moreover, said structural panels may also be finished with a perimetrical edge to conceal the fretted arrangement and to achieve a precisely finished plane.

Said edge may also be formed by the so-called "folding" method.

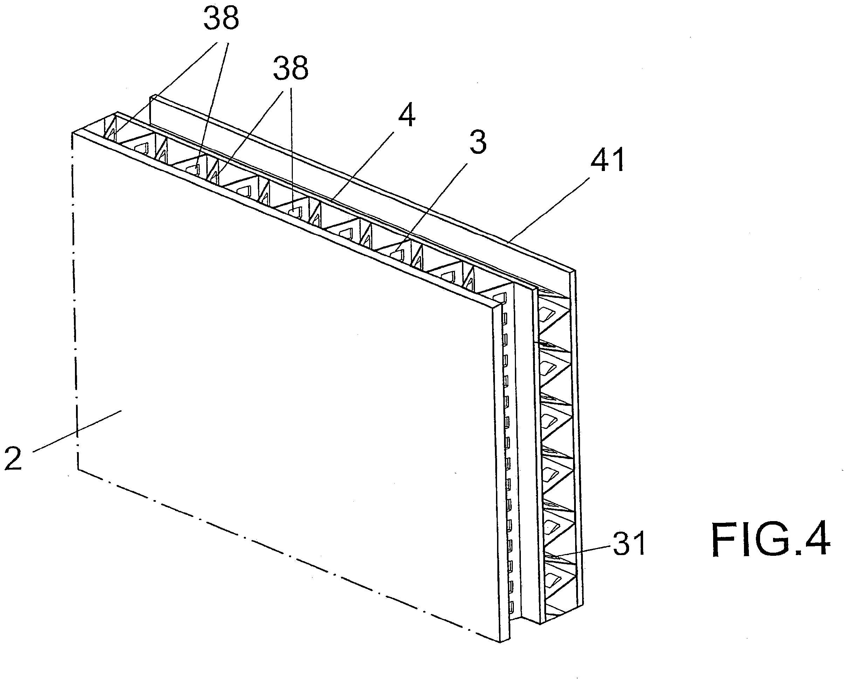

Figure 4 shows a further embodiment of the structural panel according to the present invention including a further fretted element 31 and a further plate element 41, to provide a panel having an increased thickness and improved mechanical strength.

Said further fretted element 31, perpendicular to the first fretted element 3, and said further plate element 41 may moreover be separated by a single plate element.

Figure 7 is a perspective view showing a structural panel including its structural skin or coating formed by the plate elements 2, on a single side thereof, thereby allowing said structural panel to be easily bent or curved.

Accordingly, the fretted element 3 is coupled by gluing to the plate element 4.

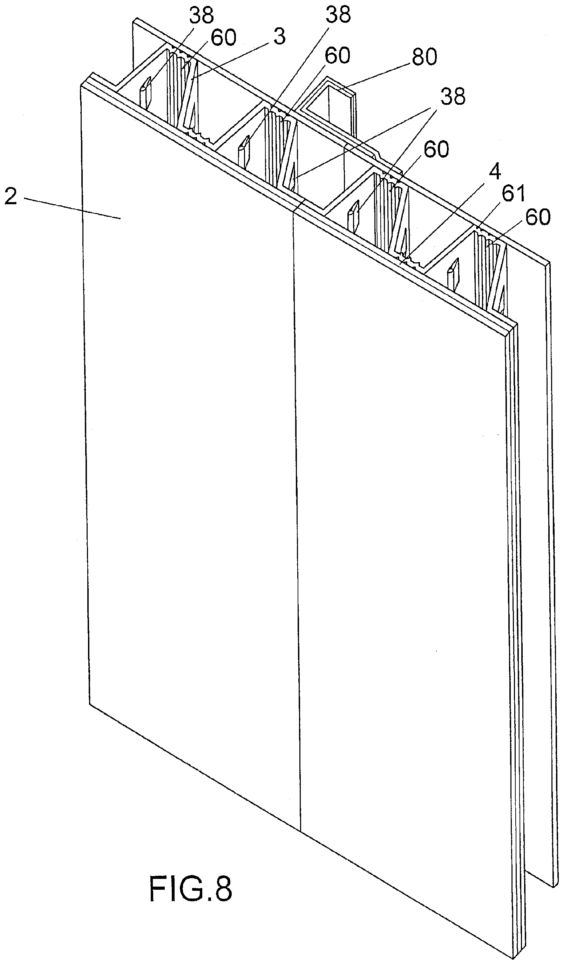

Figure 8 is a further perspective view showing a structural panel, according to a preferred embodiment of the invention, therewith an outer bent or curved profiled 80 is associated.

Figure 9 is a cross-sectional view of a structural panel having different size flat portions, thereby allowing to perform small bending radius arrangements, during the bending operation, as shown in particular in Figure 10.

The structural panels shown in Figures 9 and 10 may be made by the following making system.

At first a single-skin panel, of the type shown in Figure 7, is made and then a bent portion 50 is provided by applying the single skin element 51, and finally by applying the finishing skin or covering 53.

More specifically, at first the single-skin element of Figure 7 is made, and then the single-skin element 51 is arranged on a bent portion 50 faithfully reproducing the curved pattern to be achieved.

Then, a glue is applied on the second skin which latter is then arranged on the single-skin element.

By a cloth press or pressing belt, or other like systems, the article of manufacture thus made is sent to an oven.

In this connection, it should be pointed out that the mentioned article of manufacture may have a variable radius, for example varying in a parabolic pattern, and it may also be patterned with a curved and counter-curved configuration (i.e. with a S-pattern).

A side of said article of manufacture, or even both sides thereof, may be made of aluminium or other metal materials and/or coated by bendable materials.

Moreover, during the making of said structural sandwich panels, it is also possible to embed therein profile elements, or solid materials, thereby allowing the panel to be used without the need of re-contouring it.

The panel 1 according to the present invention has a high life duration, since the gluing of the plate elements 2 and 4 is carried out by using the surfaces of the fretted element 3, which are parallel to the plate elements 2 and 4, and moreover the longitudinal cavities 60 are also used for improving the glue material distribution.

Thus, the gluing surface will be enlarged, thereby providing an improved stability and duration of the structural panels 1 thus made.

Moreover, the provision and use of flat surfaces of the fretted element 3 contacting the plate element 2 and 4 surfaces of the panel 1, provides said panels with very good mechanical strength characteristics.

In fact, the V-shape longitudinal cavities 60, which are an essential part of the invention, provide the panel 1 with an improved transversal or cross stiffness.

The portions of the surfaces of the fretted sheet metal 3 provided for contacting the plate elements 2 and 4 comprise a plurality of longitudinal cavities 60 parallel to the bending lines 61 of the intermediate or middle fretted element 3.

Said cavities 60 also operate as stiffening and reinforcement members for the middle fretted element 3, while providing an improved adhesion of the latter to the flat and parallel surfaces 2 and 4 also constituting portions of the panel 1.

Such an adhesion is greatly improved since it is possible to press in said cavities 60 of the fretted element 3 a larger adhesive material amount, thereby providing a perfect and strong coupling between the contact surfaces of the middle fretted coupling element 3 and the flat surfaces 2 and 4 of the panel 1.

Moreover, the negative bosses 38 provide the panel 1 with a very improved stiffness and compression, bending and twisting strength, improved by at least 15% in comparison with panels including a conventional fretted arrangement.

The present invention relates moreover to a method for making structural sandwich panels 1 of the above disclosed type.

Said inventive method comprises a first operating step for making the fretted element 3 by beating a sheet metal foil by a beating tool 42 having a corresponding shape or configuration.

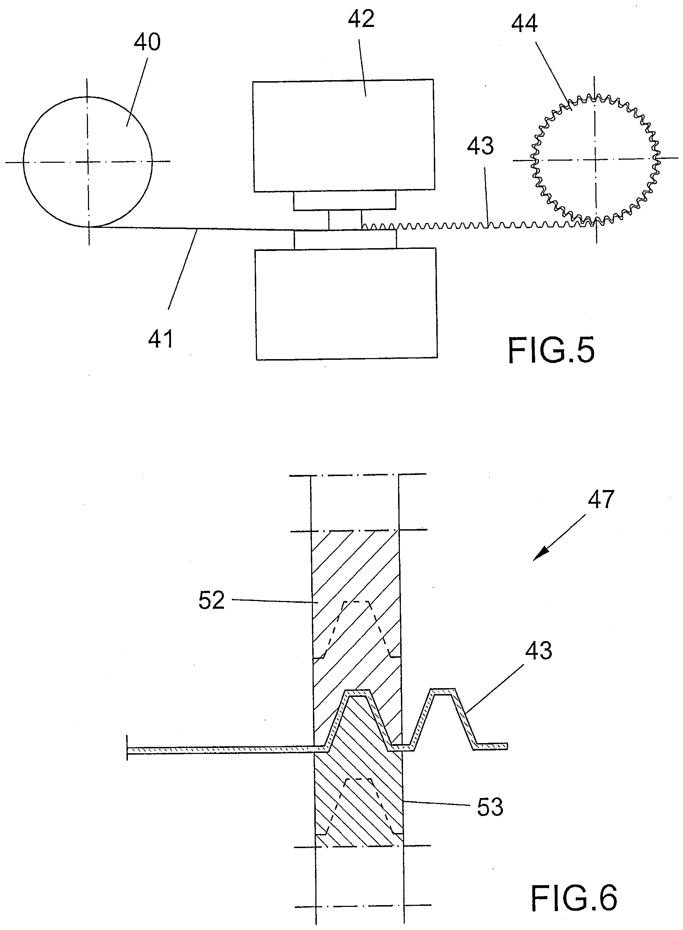

More specifically, with reference to Figure 5, said fretted element is fed from a fretted element roll 40 and conveyed, in a flat form 41, to the beating tool 42 which provides in succession a plurality of beating impacts against the flat sheet metal 41, thereby deforming the latter according to the target fretted profile or contour 43.

Finally, the fretted element is wound into a roll 44 or cut through by an automatic cutting device, not shown in the figures, arranged downstream of the machine.

In this connection it should be pointed out that the subject making method is a fully automated one, the aligning and feeding function included.

In particular, the deforming of the flat profile or contour 41 is carried out by the deforming or beating tool 42 comprising a first element, including a fretted contour or profile portion 52, and a second element, including a fretted contour or profile portion 53, which is mating the first portion, with specific making tolerances.

Thus, by using the above specifically designed beating tool, the fretted contour or profile 43 is perfectly reproduced by a simple beating operation.

In this connection it should be apparent that the structural sandwich panel according to the present invention may be made with a variable thickness depending on the punching tool 52.

The inventive method further comprises a second gluing step for gluing the plate elements 2 and 4 on the fretted element 3.

This gluing step will be designed depending on the gluing type used; in fact, in a case a cold pressing step is merely required, performed on a stacked arrangement, whereas in a second case a hot gluing-pressing operation is performed in a tunnel comprising two metal belts which are entrained by rollers and a pressing device, by driving the top portion of the tunnel.

Said motor driven roller driving belts may be caused to slide in opposite directions.

Yet a further or third case is that of performing a hot gluing by a hot pressing operation, including a press having large mass pressing surfaces.

## Claims

1. A structural sandwich panel (1) for high strength walls and covering, of the type comprising at least a plate element (2, 4) and at least a middle fretted element (3) coupled by glueing to said plate element (2, 4), said panel (1) being connectable to an identical structural panel by bending, according to any desired coupling angle and by milling a portion of said panel and by holding it in a curved condition by using a solidified plastic material, **characterized in that** said fretted element (3) comprises, at portions of flat surfaces of said fretted element (3) to be contacted with said plate element (2, 4), a plurality of V-shaped adhesive material receiving cavities (60), parallel to the bending lines of said fretted element (3), and further stiffening drawings (38), drawn in the slanted portions of said at least a fretted element.

2. A structural sandwich panel, according to claim 1, **characterized in that** said structural sandwich panel comprises a pair of plate elements, coupled to one another in a substantially parallel relationship, and **that** said fretted element is arranged between said plate elements to connect said plate elements by glueing the parallel surfaces of said fretted element.

3. A structural sandwich panel, according to claims 1 and 2, **characterized in that** a laminated element is glued to at least one of said plate elements.

4. A structural sandwich panel, according to claims 1 to 2, **characterized in that** said panel comprises a second fretted element (31), arranged between one of said plate elements and a further plate element (41).

5. A structural sandwich panel, according to claim 4, **characterized in that** said second fretted element is perpendicular to said first fretted element.

6. A structural sandwich panel, according to one or more of the preceding claims, **characterized in that** said panel comprises an aluminium sheet metal, a galvanized sheet metal or a stainless steel sheet metal.

7. A method for making the high strength flat structural sandwich panel, according to any of the preceding claims, **characterized in that** said method comprises a first operating step of making said fretted element (3) by beating a sheet metal foil by a correspondingly shaped beating tool (42), and a second glueing step of glueing said plate elements on said fretted element.

8. A method according to claim 7, **characterized in that** said second operating step of glueing is performed by a cold stacking simple pressing.

9. A method according to claim 7, **characterized in that** said second glueing step is carried out by a hot pressing of said panel in a press oven tunnel having two metal belts being motor driven through a roller drive and a pressing device with a corresponding driving of a top portion of said oven tunnel.

10. A method according to claims 7 to 9, **characterized in that** said roller driven belts slide in opposite sliding directions.

11. A method according to claims 7 to 10, **characterized in that** said beating tool (42) comprises a first beating tool element (51) including a fretted profile portion and a second beating tool element (53) including a further fretted profile portion, which is mating, with mating tolerances, said first fretted profile portion to reproduce by beating the profile of said fretted element, the fretted profile portion having a height selected based on an operating punch used.

12. A method according to claims 7 to 11, **characterized in that** the panel structural elements are glued by a hot pressing operation performed in presses having large mass pressing portions.

13. A method for making a bent structural sandwich panel according to claim 1, **characterized in that** said method comprises a step of forming a single-skin panel, forming a curved portion, applying said single-skin panel to said curved portion thereby precisely reproducing a bending pattern to be achieved and then applying a finishing skin.

## Patentansprüche

1. Struktursandwichpaneel (1) für Wände und Beläge mit hoher Festigkeit von dem Typ, der mindestens ein Plattenelement (2, 4) und mindestens ein mittleres wellenförmiges Element (3) umfasst, das mit dem Plattenelement (2, 4) durch Kleben gekoppelt ist, wobei das Paneel (1) mit einem identischen Strukturpaneel durch Biegen gemäß einem beliebigen gewünschten Kopplungswinkel und durch Fräsen eines Abschnitts des Paneels sowie durch Halten davon in einem gekrümmten Zustand unter Verwendung eines verfestigten Kunststoffmaterials verbindbar ist, **dadurch gekennzeichnet, dass** das wellenförmige Element (3), an mit dem Plattenelement (2, 4) in Kontakt zu bringenden Abschnitten von flachen Flächen des wellenförmigen Plattenelements (3), mehrere V-förmige Klebematerial aufnehmende Hohlräume (60) parallel zu den Biegelinien des wellenförmigen Elements (3) und ferner Versteifungszeichnungen (38), welche in den abgeschrägten Abschnitten des mindestens einen wellenförmigen Elements eingezeichnet sind, umfasst.

2. Struktursandwichpaneel nach Anspruch 1, **dadurch gekennzeichnet, dass** das Struktursandwichpaneel ein Paar Plattenelemente umfasst, die miteinander in einer im Wesentlichen parallelen Beziehung gekoppelt sind, und dass das wellenförmige Element zwischen den Plattenelementen angeordnet ist, um die Plattenelemente durch Kleben der parallelen Flächen des wellenförmigen Elements zu verbinden.

3. Struktursandwichpaneel nach einem der Ansprüche 1 und 2, **dadurch gekennzeichnet, dass** ein laminiertes Element an mindestens eines der Plattenelemente geklebt ist.

4. Struktursandwichpaneel nach einem der Ansprüche 1 bis 2, **dadurch gekennzeichnet, dass** das Paneel ein zweites wellenförmiges Element (31) umfasst, das zwischen einem der Plattenelemente und einem weiteren Plattenelement (41) angeordnet ist.

5. Struktursandwichpaneel nach Anspruch 4, **dadurch gekennzeichnet, dass** das zweite wellenförmige Element zu dem ersten wellenförmigen Element senkrecht ist.

6. Struktursandwichpaneel nach einem oder mehreren der vorhergehenden Ansprüche, **dadurch gekennzeichnet, dass** das Paneel ein Aluminiummetallblech, ein galvanisiertes Metallblech oder ein Edelstahl-Metallblech umfasst.

7. Verfahren zum Herstellen des flachen Struktursandwichpaneels mit hoher Festigkeit nach einem der vorhergehenden Ansprüche, **dadurch gekennzeichnet, dass** das Verfahren einen ersten Betriebsschritt zum Herstellen des wellenförmigen Elements (3) durch Schlagen einer Metallblechfolie durch ein entsprechend geformtes Schlagwerkzeug (42) und einen zweiten Klebeschritt zum Kleben der Plattenelemente auf das wellenförmige Element umfasst.

8. Verfahren nach Anspruch 7, **dadurch gekennzeichnet, dass** der zweite Arbeitsschritt zum Kleben durch ein einfaches Kaltstapelpressen durchgeführt wird.

9. Verfahren nach Anspruch 7, **dadurch gekennzeichnet, dass** der zweite Klebeschritt durch ein Heißpressen des Paneels in einem Pressofentunnel mit zwei Metallbändern, welche durch einen Rollenantrieb motorbetrieben sind, und eine Pressvorrichtung mit einem entsprechenden Antrieb eines oberen Abschnitts des Ofentunnels ausgeführt wird.

10. Verfahren nach einem der Ansprüche 7 bis 9, **dadurch gekennzeichnet, dass** sich die durch Rollen angetriebenen Bänder in entgegengesetzte Verschieberichtungen verschieben.

11. Verfahren nach einem der Ansprüche 7 bis 10, **dadurch gekennzeichnet, dass** das Schlagwerkzeug (42) ein erstes Schlagwerkzeugelement (51), welches einen wellenförmigen Profilabschnitt aufweist, und ein zweites Schlagwerkzeugelement (53), welches einen weiteren wellenförmigen Profilabschnitt aufweist, der mit Passtoleranzen zu dem ersten wellenförmigen Profilabschnitt passt, um durch Schlagen das Profil des wellenförmigen Elements zu reproduzieren, umfasst, wobei der wellenförmige Profilabschnitt eine basierend auf einem verwendeten Betriebsstempel ausgewählte Höhe aufweist.

12. Verfahren nach einem der Ansprüche 7 bis 11, **dadurch gekennzeichnet, dass** die Paneelstrukturelemente durch einen Heißpressbetrieb geklebt werden, welcher in Pressen mit Großmassenpressabschnitten durchgeführt wird.

13. Verfahren zum Herstellen eines gebogenen Struktursandwichpaneels nach Anspruch 1, **dadurch gekennzeichnet, dass** das Verfahren einen Schritt zum Bilden eines Einzelhautpaneels, Bilden eines gekrümmten Abschnitts, Applizieren des Einzelhautpaneels auf den gekrümmten Abschnitt, wodurch ein zu erzielendes Biegemuster präzise reproduziert wird, und dann Applizieren einer Abschlusshaut umfasst.

## Revendications

1. Panneau sandwich structurel (1) pour des murs et revêtements à haute résistance, du type comprenant au moins un élément de plaque (2, 4) et au moins un élément chantourné intermédiaire (3) accouplé par collage audit élément de plaque (2, 4), ledit panneau (1) pouvant être relié à un panneau structurel identique par cintrage selon n'importe quel angle d'accouplement souhaité et par fraisage d'une partie dudit panneau tout en maintenant celle-ci dans un état courbé à l'aide d'une matière plastique solidifiée, **caractérisé en ce que** ledit élément chantourné (3) comprend, sur des parties de surfaces planes dudit élément chantourné (3) destinées à être en contact avec ledit élément de plaque (2, 4), une pluralité de cavités de réception de matériau adhésif (60) en forme de V, parallèles aux lignes de cintrage dudit élément chantourné (3), ainsi que d'autres dessins de renforcement (38), dessinés dans les parties inclinées dudit au moins un élément chantourné.

2. Panneau sandwich structurel selon la revendication 1, **caractérisé en ce que** ledit panneau sandwich structurel comprend une paire d'éléments de plaque accouplés l'un à l'autre dans une relation substantiellement parallèle, et **en ce que** ledit élément chantourné est disposé entre lesdits éléments de plaque pour relier lesdits éléments de plaque en collant les surfaces parallèles dudit élément chantourné.

3. Panneau sandwich structurel selon les revendications 1 et 2, **caractérisé en ce qu'un** élément stratifié est collé à l'un au moins desdits éléments de plaque.

4. Panneau sandwich structurel selon les revendications 1 à 2, **caractérisé en ce que** ledit panneau comprend un deuxième élément chantourné (31) disposé entre l'un desdits éléments de plaque et un autre élément de plaque (41).

5. Panneau sandwich structurel selon la revendication 4, **caractérisé en ce que** ledit deuxième élément chantourné est perpendiculaire audit premier élément chantourné.

6. Panneau sandwich structurel selon l'une ou plusieurs des revendications précédentes, **caractérisé en ce que** ledit panneau comprend une tôle d'aluminium, une tôle galvanisée ou une tôle d'acier inoxydable.

7. Procédé pour la fabrication d'un panneau sandwich structurel plat à haute résistance selon l'une quelconque des revendications précédentes, **caractérisé en ce que** ledit procédé comprend une première étape d'exploitation pour la fabrication dudit élément chantourné (3) par martèlement d'une feuille de tôle à l'aide d'un outil de martèlement (42) de forme correspondante, et une deuxième étape de collage pour le collage desdits éléments de plaque sur ledit élément chantourné.

8. Procédé selon la revendication 7, **caractérisé en ce que** ladite deuxième étape d'exploitation est réalisée par pressage simple par empilage à froid.

9. Procédé selon la revendication 7, **caractérisé en ce que** ladite deuxième étape de collage est exécutée par pressage à chaud dudit panneau dans un tunnel de four de pressage comportant deux courroies métalliques entraînées par moteur à travers un entraînement à rouleau et un dispositif de pressage avec un entraînement correspondant d'une partie supérieure dudit tunnel de four.

10. Procédé selon les revendications 7 à 9, **caractérisé en ce que** lesdites courroies entraînées par rouleau coulissent dans des directions de coulissement opposées.

11. Procédé selon les revendications 7 à 10, **caractérisé en ce que** ledit outil de martèlement (42) comprend un premier élément d'outil de martèlement (51) comprenant une partie de profilé chantourné et un deuxième élément d'outil de martèlement (53) comprenant une autre partie de profilé chantourné, laquelle est accouplée, avec des tolérances d'accouplement, à ladite première partie de profilé chantourné pour reproduire par martèlement le profilé dudit élément chantourné, la partie de profilé chantourné présentant une hauteur sélectionnée sur la base d'un poinçon d'exploitation utilisé.

12. Procédé selon les revendications 7 à 11, **caractérisé en ce que** les éléments structurels de panneau sont collés par une opération de pressage à chaud exécutée dans des presses présentant des parties de pressage de masse de grande taille.

13. Procédé pour la fabrication d'un panneau sandwich structurel cintré selon la revendication 1, **caractérisé en ce que** ledit procédé comprend une étape de formation d'un panneau à peau unique, de formation d'une partie courbe, d'application dudit panneau à peau unique sur ladite partie courbe, reproduisant ainsi précisément un motif de cintrage à atteindre, puis d'application d'une peau de finition.
